# FASCICULE DE BREVET EUROPEEN

(11) **EP 3 818 258 B1**
(45) Date de publication et mention de la délivrance du brevet: **04.01.2023**
(21) Numéro de dépôt: 19749395.0
(22) Date de dépôt: 05.07.2019
(51) Int. Cl.: F01M 11/08, F01M 13/04, F01D 25/16, F01D 25/18, B01D 45/14

(54) **PIÈCE POUR DÉGAZEUR CENTRIFUGE DE TURBOMACHINE AVEC TREILLIS DE FILTRAGE**
TEIL FÜR ZENTRIFUGALENTLÜFTER EINER TURBOMASCHINE MIT EINEM FILTERGITTER
PART FOR A TURBOMACHINE CENTRIFUGAL BREATHER HAVING A FILTERING MESH

(30) Priorité: 05.07.2018 FR 1856182; 24.05.2019 FR 1905476
(43) Date de publication de la demande: 12.05.2021
(73) Titulaire: SAFRAN, 75015 Paris (FR)
(72) Inventeur: NIFENECKER, Arnaud, Georges, 77550 MOISSY-CRAMAYEL (FR); FULLERINGER, Benjamin, Nicolas, 77550 MOISSY-CRAMAYEL CEDEX (FR); PLAINO, Cédric, Jean, Daniel, 77550 MOISSY-CRAMAYEL (FR); BETBEDER-LAÜQUE, Xavier, Roger, 77550 MOISSY-CRAMAYEL (FR)
(74) Mandataire: Gevers & Orès
(86) Numéro de dépôt international: PCT/FR2019/051670
(87) Numéro de publication internationale: WO 2020/008156

(56) Documents cités:
- EP-A1- 0 626 503
- EP-A1- 2 156 941
- EP-A1- 2 463 008
- US-A- 6 033 450
- US-A1- 2004 098 956
- US-A1- 2005 211 093
- Yves Gaillard ET AL: "Tech Hour Mousses métalliques par voie de fonderie et structures lattices 29/11/16", , 29 novembre 2016 (2016-11-29), pages 1-45, XP055628182, Extrait de l'Internet: URL:https://www.nae.fr/wp-content/uploads/ 2018/04/TechHour_Lattice_20161129_NAE.pdf [extrait le 2019-10-02]
- Matthieu Blanchet: "Conférence Alvéotec du 21 mars 2014", , 21 mars 2014 (2014-03-21), pages 1-37, XP055628187, Extrait de l'Internet: URL:http://www.alveotec.fr/fichiers/htmlEd itor/les%20mousses%20métalliques,%20fabric ations%20et%20applications%20-2.pdf [extrait le 2019-10-02]
- GONZALEZ-GARCIA J ET AL: "CHARACTERIZATION OF A CARBON FELT ELECTRODE: STRUCTURAL AND PHYSICAL PROPERTIES", JOURNAL OF MATERIALS CHEMISTRY, ROYAL SOCIETY OF CHEMISTRY, GB, vol. 9, no. 2, 1 février 1999 (1999-02-01) , pages 419-426, XP000831075, ISSN: 0959-9428, DOI: 10.1039/A805823G

## Description

### Domaine technique de l'invention

L'invention concerne notamment un dégazeur centrifuge de turbomachine.

### Arrière-plan technique

Les turbomachines sont des systèmes complexes qui mettent en œuvre un certain nombre d'ensembles tournants (turbines, compresseur, etc.) qui doivent être équipés de dispositifs d'étanchéité. Ces dispositifs d'étanchéité sont en général réalisés par des labyrinthes d'air pressurisé aménagés au voisinage des ensembles tournants. Pour ce faire, un air est prélevé directement dans la veine d'air de la turbomachine. Cet air transite ensuite dans la turbomachine par les différents labyrinthes prévus à cet effet, puis est évacué vers l'extérieur de la turbomachine pour limiter la montée en pression des autres zones de la turbomachine, notamment le réducteur, la boite d'accessoires, etc. Cet air ayant transité par différentes zones de la turbomachine est chargé en huile utilisée pour le refroidissement et la lubrification des paliers et des pignons des ensembles tournants. Pour éviter le rejet d'air chargé d'huile, atténuer l'impact écologique des turbomachines, réduire la consommation d'huile et limiter les opérations de remplissage des réserves d'huile, il est important de prévoir des dégazeurs qui permettent de séparer l'huile de l'air avant d'évacuer l'air vers l'extérieur de la turbomachine.

Un tel dégazeur est en général agencé et entrainé par une prise de puissance mécanique au niveau de la boite d'accessoires ou du réducteur de la turbomachine.

De manière connue, un tel dégazeur centrifuge comprend une ou plusieurs enceinte(s) de séparation centrifuge du mélange air/huile agencée(s) autour d'un arbre creux et délimitée(s) par une paroi annulaire externe et une paroi annulaire interne. Le dégazeur comprend en outre une entrée axiale d'alimentation de l'enceinte avec le mélange air/huile, et une sortie d'huile périphérique ménagée dans la paroi externe. Ainsi, lors de la mise en rotation du dégazeur, obtenue en général par l'intermédiaire d'un pignon de la boite d'accessoires ou du réducteur, l'huile est naturellement entrainée par force centrifuge vers la sortie d'huile ménagée en périphérie du dégazeur. Une sortie d'air déshuilé est en outre ménagée dans la paroi interne et reliée à l'arbre creux, ce qui permet d'évacuer l'air vers l'extérieur.

Certains dégazeurs, tels que celui décrit dans la demande WO-A1-2011/004023, comprennent en outre des filtres agencés dans l'enceinte du dégazeur pour améliorer le captage des gouttes d'huile et favoriser ainsi le déshuilage du mélange. En effet, les filtres augmentent la surface de contact disponible et améliorent donc la probabilité qu'une goutte d'huile transportée par le flux de mélange soit accrochée à une paroi. Ces filtres sont en général formés d'une mousse métallique, telle qu'une mousse commercialisée sous la dénomination Retimet^{®}. US2004/098956 A1 décrit un autre exemple d'un tel dégazeur.

Cependant les performances des dégazeurs connus sont en général handicapées par des pertes de charge internes qui sont dues à deux causes en particulier, les formes de la veine, comprenant l'enceinte de centrifugation, empruntée par le flux d'air en cours de déshuilage, et la présence de la mousse métallique.

En ce qui concerne les formes internes au dégazeur délimitant la veine empruntée par le flux d'air, le procédé de fabrication peut alors être limitant quant au potentiel de géométrie optimale à réaliser.

En ce qui concerne, la présence de mousse métallique, les pertes de charge sont dues au fait qu'à haute vitesse (par exemple pour des vitesses de l'ordre de 6000 tours/min), la surface frontale constituée par la mousse métallique agit comme un mur et le degré de pénétration des particules d'air dans la mousse est faible.

Il existe donc un besoin d'améliorer la conception de l'enceinte de séparation centrifuge pour optimiser les performances de déshuilage tout en limitant la perte de charge au travers du dégazeur.

### Résumé de l'invention

A cet effet, l'invention concerne une pièce pour un dégazeur centrifuge d'un mélange air/huile de turbomachine, destinée à tourner autour d'un axe de symétrie, formant une enceinte annulaire de séparation centrifuge dudit mélange comportant une entrée orientée axialement pour l'alimentation avec ledit mélange, une première sortie orientée radialement vers l'intérieur pour la sortie de l'air déshuilé séparé dudit mélange et au moins une seconde sortie d'huile orientée radialement vers l'extérieur et destinée à évacuer l'huile séparée dudit mélange vers l'extérieur du dégazeur, l'enceinte comprenant en outre au moins une structure en treillis occupant au moins un espace dans ladite veine qui ferme la communication entre l'entrée axiale et la sortie radiale interne.

Ladite pièce est caractérisée en ce que la structure en treillis est formée par la répétition spatiale, soit pour la matière soit pour le vide, d'un motif unique réalisé par l'interconnexion de formes simples à choisir parmi des sphères ou ovoïdes et des barreaux de section constante, notamment des cercles, des rectangles ou des octogones, ledit motif étant agencé de manière à ce que les vides entre la matière communiquent de façon à organiser des chemins traversant la matière dans au moins trois dimensions d'espace formant un trièdre.

Les études ont permis de valider la performance de treillis réalisée sur ce principe pour déshuiler le mélange par centrifugation tout en minimisant les pertes de charge. De nombreuses variations géométriques autour de structures de base ont été utilisées pour cette validation : variation de diamètre des barreaux, de la distance inter-éléments géométriques, de la longueur des barreaux, remplacement de section circulaire par d'autres géométries (type polyèdres) et inversement.

De plus, la répétition d'un motif défini seulement par quelques paramètres géométriques est adaptée à des modes de fabrication tels que la fabrication additive et rend la réalisation de la pièce plus simple.

Selon l'invention, aporosité dudit treillis est de 95%.

La porosité est le rapport entre volume de vide et volume de matière dans le treillis. Une porosité élevée permet de limiter les pertes de charge.

Avantageusement, le motif du treillis ménage au moins un volume vide contenant une sphère ou un carré de diamètre ou de côté compris entre 1mm et 2,5mm, ou l'extension longitudinale d'un élément de matière du motif est comprise entre 1mm et 2,5mm. Avantageusement aussi, la dimension transverse d'un élément de vide ou d'un élément de matière est comprise entre 0,1mm et 1mm.

Ces dimensions sont adaptées pour que les gouttelettes d'huiles soient captées le long des éléments de matière du treillis sans engorger le passage du mélange au travers de ce dernier. On notera que ces paramètres peuvent évoluer graduellement dans le treillis suivant la localisation dans la pièce pour tenir compte de l'état du mélange en fonction de son trajet dans le dégazeur. Selon un mode de réalisation d'un treillis selon l'invention le motif des vides est formé par des sphères sécantes à une sphère centrale.

Selon d'autres modes de réalisation, le motif des vides est formé par des barreaux sécants à une sphère centrale, une sphère de diamètre inférieur à la sphère centrale pouvant être connectée à au moins l'un desdits barreaux.

Selon encore d'autres modes de réalisation, le motif de matière comprend une première série de barreaux orientés dans une première direction et répartis en quinconce transversalement, ayant des points de croisement avec une deuxième série de barreaux orientés dans une deuxième direction, transversale à la première direction, également répartis en quinconce transversalement, le motif comprenant en outre des séries de barreaux complémentaires reliant en zig-zag des points de croisement dans une rangée de barreaux de la première série, respectivement la deuxième série, avec des barreaux de la deuxième série, respectivement la première série, traversant ladite rangée, de manière à créer un enchevêtrement de matière autour des vides.

Selon encore d'autres modes de réalisation, le motif matière comprend des barreaux interconnectés selon des hexaèdres.

Selon encore d'autres modes de réalisation, le motif de matière comporte un nœud où deux barreaux formant un premier dièdre sont connectés à deux autres barreaux formant un deuxième dièdre tourné sensiblement de 90 degrés par rapport au premier selon un axe médian commun.

Avantageusement, ladite pièce est fabriquée d'une seule pièce, par exemple fabrication additive. Cela permet d'optimiser les formes de la pièce et d'intégrer le treillis dans ces formes. L'invention concerne également un dégazeur centrifuge d'un mélange air/huile de turbomachine comprenant une pièce telle que décrite précédemment, un arbre creux solidaire de ladite pièce et configuré pour recueillir l'air sortant de la sortie radiale interne, et un pignon de mise en rotation de l'ensemble.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] la figure 1 montre une vue schématique en perspective d'un dégazeur concerné par l'invention, coupé selon un plan de symétrie ;
[Fig.2] la figure 2 montre une vue schématique partielle en perspective et coupée selon un plan de symétrie d'une pièce fabriquée selon l'invention pour le dégazeur de la figure 1 ;
[Fig.3] la figure 3 montre une vue en perspective schématique du motif des volumes de vide d'un premier mode de réalisation d'un treillis selon l'invention à installer dans la pièce de la figure 1 ;
[Fig.4] la figure 4 montre une vue en perspective schématique d'une portion d'un treillis correspondant au motif de la figure 3 ;
[Fig.5] la figure 5 montre une vue en perspective schématique du motif des volumes de vide d'un deuxième mode de réalisation d'un treillis selon l'invention à installer dans la pièce de la figure 1 ;
[Fig.6] la figure 6 montre une vue en perspective schématique d'une portion d'un treillis correspondant au motif de la figure 5 ;
[Fig.7] la figure 7 montre une vue en perspective schématique du motif des volumes de vide d'un troisième mode de réalisation d'un treillis selon l'invention à installer dans la pièce de la figure 1 ;
[Fig.8] la figure 8 montre une vue en perspective schématique d'une portion d'un treillis correspondant au motif de la figure 7 ;
[Fig.9] la figure 9 montre une vue en perspective schématique du motif des volumes de vide d'un quatrième mode de réalisation d'un treillis selon l'invention à installer dans la pièce de la figure 1 ;
[Fig.10] la figure 10 montre une vue en perspective schématique d'une portion d'un treillis correspondant au motif de la figure 9 ;
[Fig.11] la figure 11 montre une vue en perspective schématique du motif des volumes de matière d'un cinquième mode de réalisation d'un treillis selon l'invention à installer dans la pièce de la figure 1 ;
[Fig.12] la figure 12 montre une vue en perspective schématique d'une portion d'un treillis correspondant au motif de la figure 11 ; et
[Fig.13] la figure 13 montre une vue en perspective schématique du motif des volumes de matière d'un sixième mode de réalisation d'un treillis selon l'invention à installer dans la pièce de la figure 1.

### Description détaillée de l'invention

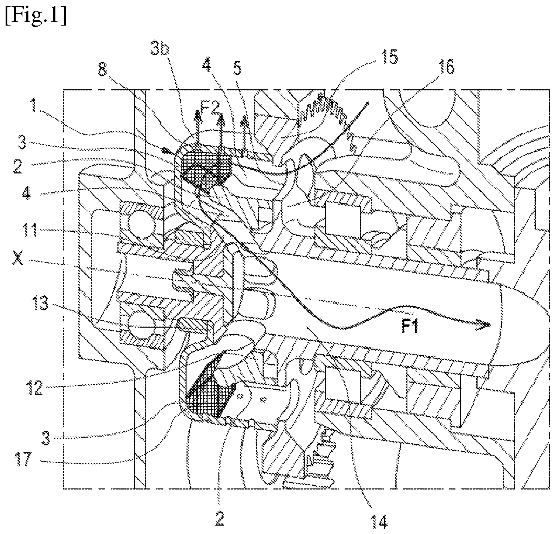

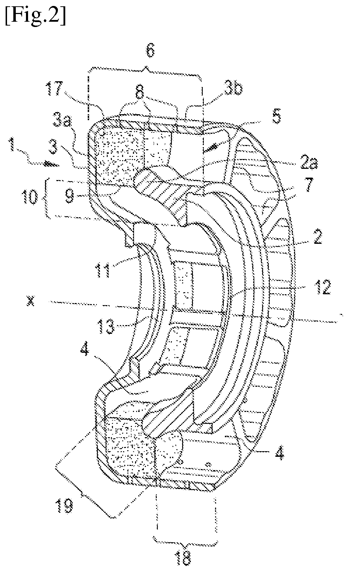

Sur les figures, les échelles et les proportions ne sont pas strictement respectées et ce, à des fins d'illustration et de clarté. Un dégazeur utilisant l'invention comprend, tel que représenté sur la figure 1, une pièce mobile 1 en rotation autour d'un axe longitudinal de symétrie X. Comme cela est montré plus en détail sur la figure 2, ladite pièce mobile 1 comporte une partie structurelle qui comprend une première coque 2 entourée d'une deuxième coque 3. L'espace entre les deux coques 2, 3, forme une veine 4 de révolution autour de l'axe central de symétrie X, destinée à faire circuler le mélange d'air et d'huile à séparer.

La veine 4 comporte une entrée axiale 5 destinée à l'entrée du mélange d'air et d'huile à séparer. Cette entrée axiale 5 correspond à une première extrémité d'une première partie 6 de la veine 4 qui s'étend essentiellement de manière axiale, en vue de centrifuger le mélange. La première partie de veine 6, qui s'étend axialement, fait office d'enceinte de centrifugation car c'est là que la force centrifuge s'exerce avec le plus de force sur le mélange air/huile. Elle est donc appelée enceinte de centrifugation 6 dans la suite de la description.

La veine 4 comprend ici en outre une pluralité de compartiments répartis circonférentiellement autour de l'axe de symétrie X. Les compartiments sont formés par des cloisons longitudinales 7 s'étendant radialement. Avantageusement, ces cloisons longitudinales 7 relient la première 2 et la deuxième coque 3, formant ainsi une liaison qui les solidarise. Chaque compartiment communique avec l'entrée axiale 5 du mélange. Les cloisons axiales 7 forment des ailettes qui entraînent en rotation le mélange entrant dans les compartiments adjacents.

A sa deuxième extrémité axiale, l'enceinte de centrifugation 6 est fermée axialement par une portion 3a de la deuxième coque 3, sensiblement perpendiculaire à l'axe de symétrie X, et comporte une ouverture radiale 9 vers l'axe de symétrie X entre la première 2 et la deuxième coque 3. La deuxième coque 3 forme une paroi 3b radialement externe de l'enceinte de centrifugation 6 qui est sensiblement annulaire, entre l'entrée 6 et la partie 3a de la deuxième coque qui limite axialement l'enceinte de centrifugation 6 à sa seconde extrémité. L'enceinte de centrifugation 6 comporte une pluralité de sorties radiales 8 d'huile, sous la forme d'orifices traversants ménagés dans la paroi radialement externe 3b et est configurée pour pouvoir évacuer l'huile séparée du mélange par l'effet de la force centrifuge du dégazeur. Chaque compartiment de la veine 4 est relié à une ou plusieurs sortie(s) radiale(s) 8 d'huile.

La première coque 2 forme une paroi radialement interne des compartiments de la veine dans l'enceinte de centrifugation 8. Elle s'arrête axialement avant la portion axiale 3a de la deuxième coque 3, en partant de l'entrée 6 de la veine, pour ménager l'ouverture radiale 9 vers l'intérieur à la seconde extrémité de l'enceinte de centrifugation 6. Sa forme peut être optimisée pour favoriser la séparation de l'huile et pour minimiser les pertes de charge, notamment au niveau du coude formé au niveau de la sortie radiale. Sur l'exemple présenté, la paroi radialement interne 2 est sensiblement annulaire en partant de l'entrée axiale 5 et comporte une extrémité axiale 2a opposée à l'entrée radiale 5 formant un bourrelet ou un plateau circonférentiel arrondi au niveau de la seconde extrémité de l'enceinte de centrifugation 6. Cette forme de l'extrémité axiale 2a de la première coque a tendance à renvoyer le fluide radialement vers l'extérieur au passage du coude formé dans la veine 4 en sortie de l'enceinte de centrifugation 6, de manière à optimiser l'écoulement du flux mélange air/huile.

La veine 4 comporte une deuxième partie 10 qui communique avec l'enceinte de centrifugation 6 par l'ouverture radiale 9 entre la première 2 et la deuxième 3 coques et qui est configurée pour guider le fluide vers une sortie radiale 11 dans un espace cylindrique vide, qui s'étend axialement entre les limites de l'enceinte de centrifugation 6. La première 2 et la deuxième 3 coques forment des colliers 12, 13, qui limitent ledit espace cylindre vide. Ces colliers 12, 13 sont configurés pour relier la pièce 1 à un arbre 14, représenté sur la figure 1, qui entraîne la pièce en rotation. La section de la veine 4 selon un plan longitudinal a une forme coudée optimisée pour guider l'air déshuilé vers la sortie radiale interne 12.

La pièce 1 est utilisée dans un dégazeur qui comprend un pignon 15 de mise en rotation de la pièce, comprenant lui-même un voile 16. Sur l'exemple présenté, le voile 16 est relié solidairement à la pièce mobile 1 et comprend des ouvertures en regard de l'entrée axiale 5 pour le passage du mélange dans les compartiments de la veine 4. Le voile 16 est également relié solidairement à l'arbre creux 14.

Avantageusement, la partie structurelle de la pièce 1, composée de la première coque 2 et de la deuxième coque 3, est réalisée par une méthode de fabrication additive qui permet de réaliser les formes complexes de l'exemple, notamment en vue de favoriser la séparation des gouttelettes d'huile du mélange tout en minimisant les pertes de charges. La fabrication additive de peut se faire, de manière connue par un procédé de fusion laser contrôlée d'une poudre métallique. Cependant, l'exemple présenté n'est nullement limitatif pour la mise en œuvre de l'invention et des méthodes de fabrication par usinage ou par fonderie peuvent également être utilisées pour des formes plus conventionnelles de la veine de passage du mélange dans la pièce mobile 1.

Selon l'invention, la pièce comporte en outre au moins une structure alvéolaire réalisée par un treillis 17 dans chaque compartiment.

Avantageusement, le treillis 17 ne s'étend généralement pas intégralement dans les compartiments de la veine 4. Sur l'exemple présenté, il s'étend principalement dans l'enceinte de centrifugation 6 de manière à former deux espaces distincts successifs dans le compartiment : un espace libre 18 de matériau s'étendant uniquement dans l'enceinte de centrifugation 6 et un espace 19 rempli par le treillis 17. L'espace libre 18 est alimenté en mélange par l'ouverture du compartiment sur l'entrée axiale 5 et il débouche dans l'espace 19 rempli par le treillis 17. L'espace 19 rempli par le treillis 17 débouche dans la deuxième partie 10 de la veine. Les configurations présentées sur les figures 1 et 2 ne sont pas limitatives. En particulier le treillis 17 peut occuper un espace uniquement dans une partie cylindrique de l'enceinte de centrifugation 6, entre l'entrée 5 et le coude, ce qui rend plus facile, par exemple, une fabrication de la pièce 1 par assemblage en introduisant le treillis 17 dans les compartiments de la veine 4. Comme indiqué par la flèche F1 sur la figure 1, l'air contenant de l'huile entre donc dans la pièce mobile 1 par les ouvertures du voile 16. Dans l'espace libre 18, les cloisons longitudinales 7 entraînent le mélange en rotation. Au cours du passage du flux F1 dans cette première partie 18 de l'enceinte, une première phase de déshuilage est réalisée par effet de centrifugation. Le treillis 17 présente une fonction de captage des gouttes d'huile non extraites au cours de la première phase. Par effet de centrifugation, l'huile est évacuée vers les sorties radiales 8 au travers du treillis 17, comme illustré par les flèches F2. Cette deuxième phase de déshuilage est en outre réalisée dans l'espace 19 occupé par le treillis 17 sans pertes de charge notables du fait de l'attaque axiale des gouttes d'huile et de la structure des treillis selon l'invention.

Ensuite, l'air déshuilé ayant traversé le treillis 17 dans la veine 4 arrive dans l'arbre creux 14 pour être évacué.

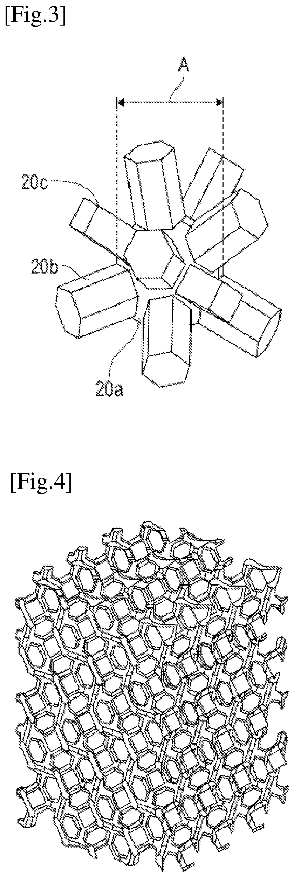

Toujours selon l'invention, le treillis 17 est formé par la répétition suivant les trois dimensions d'espace d'un motif unique agencé de manière à ce que les vides entre la matière communiquent de façon à organiser des chemins traversant la matière du treillis dans les trois dimensions d'espace, lesdits chemins présentant des coudes et/ou des pincements et/ou des bifurcations. En référence aux figures 3 à 13, plusieurs modes de réalisation d'un tel treillis sont présentés.

Selon un premier mode de réalisation, en référence à la figure 3, les vides forment un motif où une sphère centrale 20a est reliée à une première série de huit barreaux 20b cylindriques de section hexagonale, selon une symétrie octogonale. De plus, entre quatre barreaux 20b de la première série, un barreau 20c cylindrique de section carrée est relié à ladite sphère 20a, formant une deuxième série de six barreaux perpendiculaires. Le diamètre A de la sphère centrale 20a est typiquement d'environ 2,5mm. Le motif se répète spatialement suivant les trois directions spatiales définies par les barreaux 20c de la deuxième série qui relient la sphère centrale 20a à six autres sphères de vides dans le réseau du treillis. Les barreaux 20b de la première série reliant la sphère centrale 20a aux huit autres sphères centrales l'entourant en diagonale dans le réseau du treillis. La longueur des barreaux 20b et 20c est ajustée pour obtenir un treillis très aéré, typiquement avec une porosité de 90%. La figure 4 illustre le type de réseau de matière que l'on obtient pour un tel treillis. On voit sur ces figures que les vides ménagent un passage du fluide dans plusieurs directions non coplanaires mais que, en passant d'une sphère à un barreau, le flux rencontre un rétrécissement de section de son passage, peut être dévié de direction et/ou se scinder en plusieurs flux.

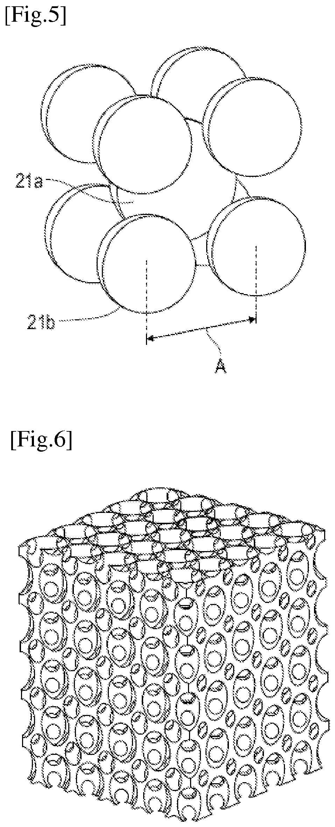

Selon un deuxième mode de réalisation, en référence à la figure 5, les vides forment un motif où une sphère centrale 21a, de diamètre A compris entre environ 2mm et 2,2 mm, est sécante avec une série de quatre sphères 21b de diamètre plus petit, selon une symétrie de réseau cubique. Le motif des volumes de vide, répétés suivant les trois directions d'espace, donne en complément un réseau de matière pour le treillis tel que celui illustré sur la figure 6. Avec cette organisation, la porosité du treillis est plutôt de l'ordre de 85%. Ici encore, on voit qu'un fluide passant d'une sphère centrale 21b à une autre en suivant l'une des diagonales du réseau cubique, est confronté à des étranglements ou pincements en passant de la sphère centrale 21a à une sphère intermédiaire 21b.

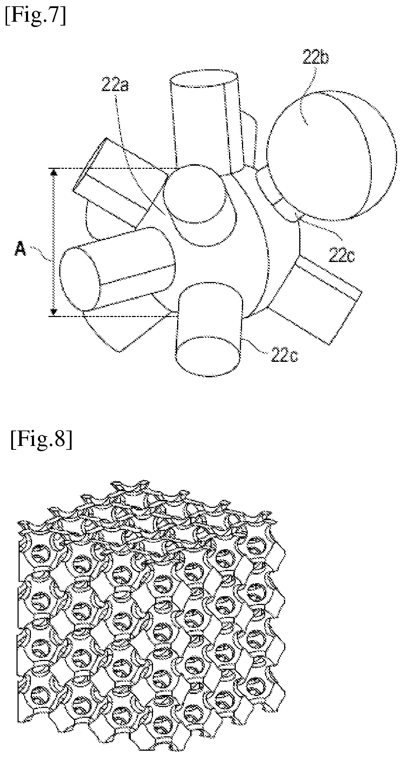

Selon un troisième mode de réalisation, en référence à la figure 7, les vides forment un motif où une sphère centrale 22a, est reliée à une série d'autres sphères 22b par des barreaux 22c de section cylindrique, suivant les diagonales d'un réseau cubique. Typiquement le diamètre A d'une sphère 22a ou 22b dans ce réseau est de l'ordre de 2,5mm. La longueur et la section des barreaux est ici ajustée pour obtenir une porosité de l'ordre de 77%. La figure 8 illustre le type de réseau de matière que l'on obtient pour un tel treillis. Ici encore, on voit que le passage du fluide dans les différentes directions subit des pincements ou étranglements entre les barreaux 22c et les sphères 22a ou 22b. Ces trois premiers modes de réalisation allient une porosité élevée, permettant la traversée du treillis par un mélange chargé de gouttelettes à une grande surface de contact entre la matière et le vide, ce qui peut faciliter la captation des gouttelettes par le treillis.

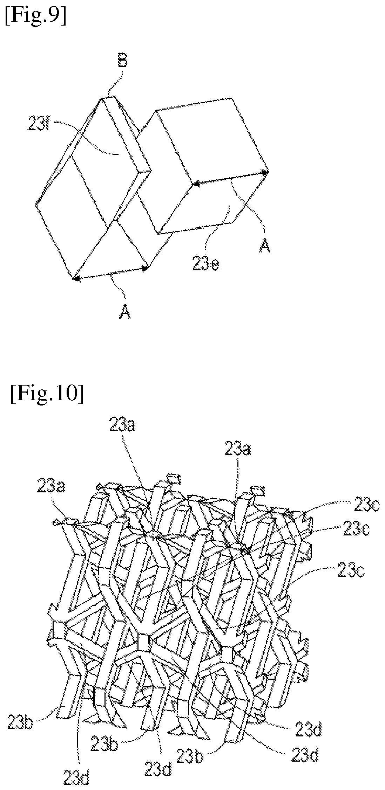

Selon un quatrième mode de réalisation, en référence à la figure 10, le motif de matière comprend une première série de barreaux 23a orientés dans une première direction et répartis en quinconce transversalement, croisant une deuxième série de barreau 23b orientés dans une deuxième direction, transversale à la première direction, et aussi répartis en quinconce transversalement. Pour les barreaux de la première série de barreaux 23a contenus dans un même plan, des barreaux de la deuxième série 23b rencontrent ces barreaux 23a en un point de croisement et des barreaux 23b passent entre les barreaux 23a. Le même phénomène se reproduit en interchangeant la première et la deuxième série de barreaux. Le treillis est complété par des premières séries de barreaux 23c complémentaires qui vont en zig-zag dans les plans des barreaux 23b de la deuxième série entre deux points de croisement et un barreau 23a de la première série traversant ledit plan entre deux barreaux 23b. Des deuxièmes séries de barreaux 23d complémentaires sont obtenues en échangeant le rôle de la première 23a et de la deuxième 23b série de barreaux. Comme illustré sur la figure 10, cela crée un enchevêtrement de matière autour des vides qui communiquent entre eux dans toutes les directions. En référence à la figure 9, le motif des volumes de vide ainsi créé est assez complexe mais on voit que l'on crée des volumes de vide cubiques 23e, ici d'arrête A comprise entre environ 1,2mm et 1,8mm, reliés à des volumes de vides étirés 23f. Ce motif crée des étranglements et des bifurcations pour le passage du fluide dans le treillis suivant les différentes directions d'espace. Les volumes de vide étirés 23f ont une plus grande dimension équivalente à celle A des arrêtes des volumes de vide cubiques 23e et une plus petite dimension B comprise environ entre 0,1 et 1mm. Les barreaux du treillis sont tous sensiblement de section cubique. La grande dimension A des volumes de vide est sensiblement équivalente à la longueur des barreaux dans le motif et la plus petite dimension B est sensiblement égale à l'arrête des sections des barreaux. On peut atteindre typiquement une porosité de 90% à 95% en ajustant les paramètres dimensionnels de ce treillis.

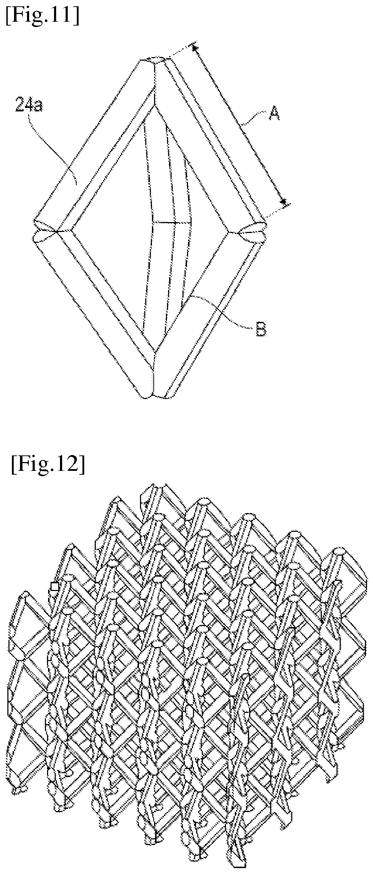

Selon un cinquième mode de réalisation, en référence à la figure 11, le motif de matière comprend une série de barreaux 24a interconnectés suivant un hexaèdre. Les hexaèdres sont empilés suivant la direction verticale par rapport à la figure 11 et assemblés suivant une organisation hexagonale dans le plan horizontal. Le treillis ainsi obtenu est illustré sur la figure 12. Les barreaux 24a sont des cylindres de section circulaire, mais leur section peut aussi être carrée ou rectangulaire ou être un polygone régulier. La longueur A des barreaux est généralement comprise entre 1mm et 2mm environ. Le diamètre B de leur section est généralement compris entre 0,1mm et 1mm. Il est possible d'atteindre une porosité de 90%% à 95% en ajustant ces paramètres. Dans ce treillis, les vides entre les barreaux ménagent des passages pour le fluide dans toutes les directions mais, à chaque direction, soit la section de passage entre les barreaux évolue suivant l'endroit du motif, soit un barreau 24a s'interpose, séparant le passage en deux.

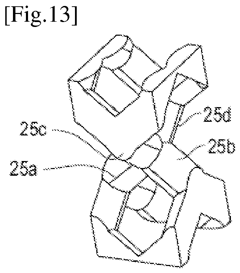

Selon un sixième mode de réalisation, en référence à la figure 13, le motif de matière comporte un nœud où deux barreaux, 25a et 25b, formant un premier dièdre sont connectés à deux autres barreaux, 25c et 25d, formant un deuxième dièdre tourné sensiblement de 90 degrés par rapport au premier selon un axe médian commun. Le motif se répète spatialement, l'extrémité de chaque barreau formant un nœud où deux dièdres se touchent. Comme dans le mode précédent, les barreaux 25a à 25d sont des cylindres de section circulaire, mais leur section peut aussi être carrée ou rectangulaire ou être un polygone régulier. La longueur des barreaux est généralement comprise entre 0,4mm et 1mm environ. Le diamètre de leur section est généralement compris entre 0,1mm et 1mm. Il est possible d'atteindre une porosité de 90% à 95% en ajustant ces paramètres. Dans ce treillis, les vides entre les barreaux, 25a à 25d, ménagent des passages pour le fluide dans toutes les directions mais, à chaque direction, soit la section de passage entre les barreaux évolue suivant l'endroit du motif, soit un barreau s'interpose, séparant le passage en deux. Plusieurs matériaux sont possibles pour réaliser les treillis selon l'invention. Un procédé de fabrication additive du treillis, par exemple par fusion laser d'une poudre métallique, permet de réaliser les motifs présentés. Ce procédé permet également de faire varier la taille du motif selon la location dans l'enceinte de centrifugation. Pour l'exemple de pièce 1 présentée sur les figures 1 et 2, la fabrication additive d'une seule pièce des parois 3 et 2 et du treillis permet de loger le treillis dans l'espace 19 contournant le coude de la veine. Cet exemple n'est pas limitatif, une fabrication séparée de la structure de l'enceinte de centrifugation 8 et des structures en treillis avec un assemblage en final est envisageable pour d'autre géométrie de la pièce mobile.

Dans des variantes de réalisation du treillis 17 dans l'enceinte 6, il est possible de répéter les motifs selon les axes en faisant varier continument les paramètres géométriques. Il est alors possible d'obtenir un treillis à densité variable. En ce qui concerne les variations axiales, cela permet, par exemple, de capter des gouttes de plus en plus petites au fur et à mesure de l'avancement de l'air huilé F1 dans le treillis, en limitant les effets sur les pertes de charges. Radialement, une taille plus ou moins grande du motif du treillis 17 permet d'uniformiser les pertes de charge entre les zones proches de la paroi interne 2, peu soumises à la force centrifuge, et les zones proches de la paroi externe 3, fortement soumises à la force centrifuge. Il est également possible de faire varier la taille du motif en azimut à l'intérieur de chaque compartiment. Comme pour les effets de force centrifuge dans le sens radial, cela permet de prendre en compte les effets d'accumulation qui peuvent se produire contre la cloison axiale 7 du compartiment qui se trouve en arrière par rapport au sens de rotation.

Ces modes de réalisation permettent d'adapter un treillis selon l'invention à la forme de la veine de manière à maximiser le nombre de gouttelettes captées en minimisant les pertes de charge afférentes.

## Revendications

1. Pièce (1) pour un dégazeur centrifuge d'un mélange air/huile de turbomachine, destinée à tourner autour d'un axe longitudinal de symétrie (X), formant une enceinte annulaire de séparation centrifuge (6) dudit mélange comportant une entrée (5) orientée axialement pour l'alimentation avec ledit mélange, une première sortie (11) orientée radialement vers l'intérieur pour la sortie de l'air déshuilé séparé dudit mélange et au moins une seconde sortie d'huile (8) orientée radialement vers l'extérieur et destinée à évacuer l'huile séparée dudit mélange vers l'extérieur du dégazeur, l'enceinte (6) comprenant en outre au moins une structure en treillis (17) occupant au moins un espace (19) dans ladite veine qui ferme la communication entre l'entrée axiale (5) et la sortie radiale interne (11), la structure en treillis (17) étant formée par la répétition spatiale, soit pour la matière soit pour le vide, d'un motif unique réalisé par l'interconnexion de formes simples à choisir parmi des sphères ou ovoïdes et des barreaux de section constante, notamment des cercles, des rectangles ou des octogones, ledit motif étant agencé de manière à ce que les vides entre la matière communiquent de façon à organiser des chemins traversant la matière dans au moins trois dimensions d'espace formant un trièdre, **caractérisée en ce que** la porosité du treillis (17) est de 95%.

2. Pièce (1) selon la revendication 1, **caractérisée en ce que** le motif du treillis (17) ménage au moins un volume vide contenant une sphère (20a) ou un carré (23e) de diamètre ou de côté compris entre 1mm et 2,5mm, ou **en ce que** l'extension longitudinale d'un élément de matière (24a) du motif est comprise entre 1mm et 2,5mm.

3. Pièce selon l'une des revendications précédentes, **caractérisée en ce que** la dimension transverse d'un élément de vide (23f) ou d'un élément de matière (24a) est comprise entre 0,1mm et 1mm.

4. Pièce selon l'une des revendications 1 à 2, **caractérisée en ce que** le motif des vides est formé par des sphères (21b) sécantes à une sphère centrale (21a).

5. Pièce selon l'une des revendications 1 à 2, **caractérisée en ce que** le motif des vides est formé par des barreaux (20b, 22c) sécants à une sphère centrale (20a, 22a), une sphère (22b) de diamètre inférieur à la sphère centrale (22a) pouvant être connectée à au moins l'un desdits barreaux (22c).

6. Pièce selon l'une des revendications 1 à 3, **caractérisé en ce que** le motif de matière comprend une première série de barreaux (23a) orientés dans une première direction et répartis en quinconce transversalement, ayant des points de croisement avec une deuxième série de barreau (23b) orientés dans une deuxième direction, transversale à la première direction, également répartis en quinconce transversalement, le motif comprenant en outre des séries de barreaux complémentaires (23c, 23d) reliant en zig-zag des points de croisement dans une rangée de barreau (23a) de la première série, respectivement la deuxième série, avec des barreaux (23b) de la deuxième série, respectivement la première série, traversant ladite rangée, de manière à créer un enchevêtrement de matière autour des vides (23e, 23f).

7. Pièce selon l'une des revendications 1 à 3, **caractérisé en ce que** le motif matière comprend des barreaux (24a) interconnectés selon des hexaèdres.

8. Pièce selon l'une des revendications 1 à 3, **caractérisé en ce que** le motif de matière comporte un nœud où deux barreaux (25a, 25b) formant un premier dièdre sont connectés à deux autres barreaux (25c, 25d) formant un deuxième dièdre tourné sensiblement de 90 degrés par rapport au premier selon un axe médian commun.

9. Dégazeur centrifuge d'un mélange air/huile de turbomachine comprenant une pièce (1) selon l'une des revendications précédentes, un arbre creux (14) solidaire de ladite pièce et configuré pour recueillir l'air sortant de la sortie radiale interne (11), et un pignon (15) de mise en rotation de l'ensemble.

## Patentansprüche

1. Bauteil (1) für einen zentrifugalen Entgaser eines Luft-Öl-Gemischs einer Turbomaschine, das dazu bestimmt ist, sich um eine länglichen Symmetrieachse (X) zu drehen, und das eine ringförmige Zentrifugalabscheidekammer (6) des Gemischs aufweist, die einen axial ausgerichteten Eingang (5) für die Versorgung mit dem Gemisch aufweist, einen ersten, radial nach innen gerichteten Ausgang (11) für den Austritt der von dem Gemisch abgeschiedenen entölten Luft und mindestens einen zweiten, radial nach außen gerichteten Ölausgang (8) zum Abführen des von dem Gemisch abgeschiedenen Öls zur Außenseite des Entgasers, wobei die Kammer (6) weiter mindestens eine Geflechtstruktur (17) umfasst, die mindestens einen Raum (19) in dem Strom einnimmt, der die Verbindung zwischen dem axialen Eingang (5) und dem inneren radialen Ausgang (11) schließt, wobei die Geflechtstruktur (17) durch die räumliche Wiederholung gebildet wird, entweder für das Material oder für den Hohlraum, eines einzigartigen Musters, das durch die wechselseitige Verbindung einfacher Formen gebildet wird, die aus Kugeln oder Ovoiden und Stäben mit konstantem Querschnitt, insbesondere Kreisen, Rechtecken oder Achtecken, auszuwählen sind, wobei das Muster so angeordnet ist, dass die Hohlräume zwischen dem Material so kommunizieren, dass Wege durch das Material in mindestens drei Raumdimensionen organisiert werden, die einen Trieder bilden, **dadurch gekennzeichnet, dass** die Porosität des Geflechts (17) 95% beträgt.

2. Bauteil (1) nach Anspruch 1, **dadurch gekennzeichnet, dass** das Muster des Geflechts (17) mindestens ein Hohlraumvolumen umfasst, das eine Kugel (20a) oder ein Quadrat (23e) mit einem Durchmesser oder einer Seitenlänge zwischen 1 mm und 2,5 mm enthält, oder dass die Längserstreckung eines Materialelements (24a) des Musters zwischen 1 mm und 2,5 mm beträgt.

3. Bauteil nach einem der vorstehenden Ansprüche, **dadurch gekennzeichnet, dass** die Querabmessung eines Hohlraumelements (23f) oder eines Materialelements (24a) zwischen 0,1 mm bis 1 mm beträgt.

4. Bauteil nach einem der Ansprüche 1 bis 2, **dadurch gekennzeichnet, dass** das Muster der Hohlräume durch zu einer mittleren Kugel (21a) sekantierende Kugeln (21 b) gebildet wird.

5. Bauteil nach einem der Ansprüche 1 bis 2, **dadurch gekennzeichnet, dass** das Muster der Hohlräume durch eine zentrale Kugel (20a, 22a) schneidende Stäbe (20b, 22c) gebildet wird, wobei eine Kugel (22b) mit einem kleineren Durchmesser als die zentrale Kugel (22a) mit mindestens einem der Stäbe (22c) verbunden werden kann.

6. Bauteil nach einem der Ansprüche 1 bis 3, **dadurch gekennzeichnet, dass** das Materialmuster eine erste Serie von Stäben (23a) umfasst, die in einer ersten Richtung ausgerichtet und in versetzten Reihen quer verteil sind, die Kreuzungspunkte mit einer zweiten Serie von Stäben (23b) aufweisen, die in einer zweiten Richtung quer zur ersten Richtung ausgerichtet und ebenfalls in auch versetzten Reihen quer verteilt sind, wobei das Muster weiter Serien komplementärer Stäbe (23c, 23d) umfasst, die Kreuzungspunkte in einer Reihe von Stäben (23a) der ersten Serie bzw. der zweiten Serie zickzackförmig mit Stäben (23b) der zweiten Serie bzw. der ersten Serie verbinden, die durch die Reihe verlaufen, sodass eine Verwicklung von Material um die Hohlräume (23e, 23f) herum zu erzeugen.

7. Bauteil nach einem der Ansprüche 1 bis 3, **dadurch gekennzeichnet, dass** das Materialmuster Stäbe (24a) umfasst, die in Hexaedern miteinander verbunden sind.

8. Bauteil nach einem der Ansprüche 1 bis 3, **dadurch gekennzeichnet, dass** das Materialmuster einen Knoten aufweist, bei dem zwei Stäbe (25a, 25b), die einen ersten Dieder bilden, mit zwei weiteren Stäben (25c, 25d) verbunden sind, die einen zweiten Dieder bilden, der im Wesentlichen um 90 Grad gegenüber dem ersten um eine gemeinsame Mittelachse gedreht ist.

9. Zentrifugaler Entgaser eines Luft-Öl-Gemischs einer Turbomaschine, umfassend ein Bauteil (1) nach einem der vorstehenden Ansprüche, eine Hohlwelle (14), die fest mit dem Bauteil verbunden ist und dazu konfiguriert ist, die aus dem inneren radialen Ausgang (11) austretende Luft zu sammeln, und ein Ritzel (15), um die Anordnung in Drehung zu versetzen.

## Claims

1. A part (1) for a centrifugal breather for an air/oil mixture of a turbomachine, intended to rotate about a longitudinal axis of symmetry (X), forming an annular enclosure (6) for centrifugal separation of said mixture comprising an axially oriented inlet (5) for feeding said mixture, a first radially inwardly oriented outlet (11) for the exit of the oil-free air separated from said mixture and at least one second radially outwardly oriented oil outlet (8) oriented radially outwards and intended to discharge the oil separated from said mixture to the outside of the breather, the enclosure (6) further comprising at least one mesh structure (17) occupying at least one space (19) in said duct which closes the communication between the axial inlet (5) and the internal radial outlet (11), **characterized in that** the mesh structure (17) is formed by spatial repetition, either in terms of the material or in terms of the void, a single pattern produced by the interconnection of simple shapes to be chosen from among spheres or ovoids and bars of constant section, in particular circles, rectangles or octagons, said pattern being arranged in such a way that the void between the material communicate so as to organise paths crossing through the material in at least three dimensions of space forming a trihedron, **characterized in that** the porosity of the mesh (17) is of 95%.

2. The part (1) according to claim 1, **characterised in that** the pattern of the mesh (17) provides at least one void volume containing a sphere (20a) or a square (23e) with a diameter or side of between 1mm and 2.5mm, or **in that** the longitudinal extension of a material element (24a) of the pattern is between 1mm and 2.5mm.

3. The part according to one of the preceding claims, **characterised in that** the transverse dimension of a void element (23f) or a material element (24a) is between 0.1mm and 1mm.

4. The part according to one of claims 1 to 2, **characterized in that** the pattern of the voids is formed by spheres (21b) intersecting with a central sphere (21a).

5. The part according to one of claims 1 to 2, **characterised in that** the pattern of the voids is formed by bars (20b, 22c) intersecting with a central sphere (20a, 22a), a sphere (22b) of smaller diameter than the central sphere (22a) being connectable to at least one of said bars (22c).

6. The part according to one of claims 1 to 3, **characterised in that** the material pattern comprises a first series of bars (23a) oriented in a first direction and transversely staggered, having points of crossing with a second series of bars (23b) oriented in a second direction, transverse to the first direction, also transversely staggered, the pattern further comprising series of complementary bars (23c, 23d) connecting, in a zig-zag manner, crossing points in a row of bars (23a) of the first series, respectively the second series, with bars (23b) of the second series, respectively the first series, crossing said row, so as to create a entanglement of material around the voids (23e, 23f).

7. The part according to any one of claims 1 to 3, **characterized in that** the material pattern comprises bars (24a) interconnected in hexahedrons.

8. The part according to one of claims 1 to 3, **characterized in that** the material pattern comprises a node where two bars (25a, 25b) forming a first dihedron are connected to two further bars (25c, 25d) forming a second dihedron rotated substantially 90 degrees relative to the first dihedron along a common median axis.

9. A centrifugal breather for an air/oil mixture of a turbomachine comprising a part (1) according to one of the preceding claims, a hollow shaft (14) integral with said part and configured to collect the air exiting the internal radial outlet (11), and a pinion (15) for rotating the assembly.
